# EUROPÄISCHE PATENTSCHRIFT

(11) **EP 3 150 339 B1**
(45) Veröffentlichungstag und Bekanntmachung des Hinweises auf die Patenterteilung: **25.09.2019**
(21) Anmeldenummer: 16191143.3
(22) Anmeldetag: 28.09.2016
(51) Int. Cl.: B25F 5/00, H01M 10/48

(54) **ADAPTERANORDNUNG**
ADAPTOR
ADAPTATEUR

(30) Priorität: 29.09.2015 DE 102015116513
(43) Veröffentlichungstag der Anmeldung: 05.04.2017
(73) Patentinhaber: Metabowerke GmbH, 72622 Nürtingen (DE)
(72) Erfinder: Schumayer, Florian, 73235 Weilheim/Teck (DE); Matheis, Frank, 73265 Dettingen/Teck (DE)
(74) Vertreter: Markfort, Iris-Anne Lucie

(56) Entgegenhaltungen:
- EP-A1- 2 495 843
- EP-A1- 2 595 270
- DE-U1-202011 110 568
- US-A1- 2014 129 164

## Beschreibung

Die Erfindung betrifft eine Adapteranordnung insbesondere zur Verwendung mit einer Elektrowerkzeugmaschine, aufweisend eine Anzahl von eingangsseitigen Schnittstellen zur elektrischen Verbindung von wenigstens zwei Akkupacks sowie eine ausgangsseitige Schnittstelle zur elektrischen Verbindung mit der Elektrowerkzeugmaschine.

Grundsätzlich ist eine solche Adapteranordnung für jedes erdenkliche netzunabhängig betreibbare Elektrogerät einsetzbar und damit insbesondere für Elektrowerkzeugmaschinen geeignet. Als Elektrowerkzeugmaschinen werden vorliegend sowohl Elektrohandwerkzeugmaschinen, wie beispielsweise Bohrmaschinen, Winkelschleifer und dergleichen, als auch feststehend betriebene Maschinen, d.h. stationäre oder halbstationäre Geräte, wie beispielsweise Tischkreissägen oder dergleichen, verstanden.

Eine entsprechende Adapteranordnung für eine Elektrohandwerkzeugmaschine ist beispielsweise aus der DE 10 2008 040 061 A1 bekannt. Diese Druckschrift beschreibt eine mechanische und elektrische Kopplungsvorrichtung zur Kopplung mindestens zweier Akkupacks an einer herkömmlichen Elektrohandwerkzeugmaschine. Mittels dieser Kopplungsvorrichtung sollen mehrere Akkupacks mechanisch und elektrisch zusammengeschaltet werden, um einen Betrieb mit großem Energiebedarf mit hohen Leistungsspitzen und/oder eine verlängerte Laufzeit einer Elektrohandwerkzeugmaschine zu ermöglichen.

Mit einer solchen Zusammenschaltung von mehreren Akkupacks entstehen jedoch auch Probleme.

So ist beispielsweise in der DE 38 44 093 A1 beschrieben, dass es bei einer Reihenschaltung von Akkupacks zwar möglich ist, Elektrohandwerkzeuge mit einem größeren Leistungsbedarf zu versorgen. Bei einer solchen Verschaltung besteht jedoch das Risiko einer unbemerkten Tiefentladung eines Akkupacks, wodurch das betreffende Akkupack unbeabsichtigt zerstört werden kann. Um dieses Problem zu lösen, wird gemäß diesem Dokument ein Elektrohandwerkzeug mit netzunabhängiger Stromversorgung vorgestellt, bei dem zumindest zwei Akku-Packs über eine Schaltungsanordnung zur Überwachung ihres Ladezustandes mit dem Antriebsmotor elektrisch verbindbar sind, wobei die Akku-Packs in Reihe geschaltet und mit dem Antriebsmotor über einen Schutzschalter mit einem Steuerschaltkreis verbindbar sind, der bei Unterschreiten der unteren Grenzspannung eines der Akku-Packs die Öffnung des Schutzschalters bewirkt.

Neben der unerwünschten Tiefenentladung ist ein weiteres bekanntes Problem bei Akkupacks, dass diese im Betrieb überhitzen und hierdurch gegebenenfalls irreparablen Schaden nehmen können. Für Elektrohandwerkzeugmaschinen, die über ein einzelnes Akkupack betrieben werden, sind im Stand der Technik bereits Lösungen bekannt, die durch eine Intelligenz in Form eines Controllers neben dem Ladezustand des Akkupacks auch dessen Temperatur überwachen. Durch eine entsprechende Leistungsregelung bis hin zum Stillstand der Elektrohandwerkzeugmaschine kann somit sichergestellt werden, dass sich das Akkupack stets in einem sicheren Betriebszustand befindet.

Weiterhin ist es aus dem Stand der Technik ebenfalls bekannt, Akkupacks mit einer integrierten Überwachungsanordnung zu nutzen.

Eine solche ist beispielsweise in der Druckschrift US 2011/0198103 A1 beschrieben. Bei der darin offenbarten Ausgestaltung der Akkupacks ist die integrierte Überwachungsanordnung durch einen Mikrocontroller mit entsprechender Sensorik verwirklicht, so dass die Akkupacks in analoger und/oder digitaler Weise Daten über ihren Zustand (beispielsweise Ladezustand einzelner Akkuzellen und Temperaturstatus) ausgeben können. Die Auswertung der Akkupackzustände erfolgt bei dieser Lösung wiederum über Komponenten der Elektrohandwerkzeugmaschine.

Eine zu der vorstehenden Schrift inhaltlich ähnliche Druckschrift ist die gattungsgemäße DE 20 2011 110 568 U1, die eine Adapteranordnung mit einer Signalverarbeitungseinheit offenbart, die ein digitales Autostopp-Signal von mehreren angeschlossenen Akkupacks an eine verbundene Elektrowerkzeugmaschine weiterzugeben vermag. Im Fehlerfall kann die Adapteranordnung die Elektrowerkzeugmaschine dadurch abschalten, unabhängig davon, welches Akkupack den Fehler verursacht bzw. ein Autostopp-Signal übermittelt hat.

Hierfür sind aber einerseits bereits aufbereitete jeweilige Fehlersignale bzw. Autostopp-Signale der Akkupacks notwendig und andererseits ist eine Unterscheidung zwischen verschiedenen Fehlerursachen durch das rudimentäre binäre Fehlersignal nicht möglich.

Nachteilig am Stand der Technik ist, dass bei einer Vielzahl der bekannten Adapterlösungen die genannte Überwachung nur auf einen einzigen Akkupack beschränkt ist. Insbesondere bei gleichzeitiger Verwendung unterschiedlich ausgelegte Akkupacks an der Adapterschnittstelle kann das Verlassen des sicheren Betriebszustands des schwächeren Akkupacks unter Umständen von der Intelligenz der Elektrohandwerkzeugmaschine nicht erkannt werden und eine Reduzierung der Lebensdauer des schwachen Akkupacks wäre die Folge.

Alternativ kann vorgesehen sein, dass die Elektrohandwerkzeugmaschine die gewünschte Anzahl Akkupacks getrennt überwacht. Diese Lösung ist in der Praxis vergleichsweise unwirtschaftlich, da je nach Anspruch des Kunden nicht zwingend die Verwendung mehrerer Akkupacks an der Elektrowerkzeugmaschine notwendig ist.

In Anbetracht des bekannten Stands der Technik besteht die Aufgabe der vorliegenden Erfindung darin, eine verbesserte Adapteranordnung bereit zu stellen, die die Aufgabe der separaten Überwachung aller verbundenen Akkupacks übernimmt, ohne eine Modifikation an der Elektrowerkzeugmaschine selbst zu erfordern.

Demgemäß wird eine Adapteranordnung mit den Merkmalen des Anspruchs 1 vorgeschlagen. Bei der erfindungsgemäßen Lösung weist jeder der Schnittstellen wenigstens einen elektrischen Datenkanal zum Übertragen von wenigstens einem Datentyp und wenigstens einen elektrischen Versorgungskanal auf, wobei die Adapteranordnung dazu eingerichtet ist, über die Datenkanäle der eingangsseitigen Schnittstellen Daten von den verbundenen Akkupacks, insbesondere über ihren Zustand, und über die elektrischen Versorgungskanäle der eingangsseitigen Schnittstellen Energie zur elektrischen Versorgung wenigstens eines Verbrauchers der Elektrowerkzeugmaschine zu empfangen. Die Adapteranordnung umfasst ferner eine Signalverarbeitungseinheit, die dazu ausgebildet ist, die bereitgestellten Daten der Ackupacks zu verarbeiten und an der ausgangsseitigen Schnittstelle bereit zu stellen, wobei die Signalverarbeitungseinheit dazu eingerichtet ist, die bereitgestellten Daten des gleichen Datentyps zu vergleichen und jeweils eine Information über das kritischere Datum an der ausgangsseitigen Schnittstelle bereit zu stellen.

Erfindungsgemäß kann der wenigstens eine elektrische Versorgungskanal unabhängig von dem wenigstens einen elektrischen Datenkanal ausgebildet sein. Es ist jedoch ebenso denkbar, dass der wenigstens eine elektrische Versorgungskanal zugleich als Datenkanal verwendet wird und somit wenigstens einer der Datenkanäle einteilig mit dem wenigstens einen Versorgungskanal ausgebildet bzw. physikalisch mit diesem identisch ist.

Die genannte, extern von den Akkupacks ausgebildete, Signalverarbeitungseinheit der Adapteranordnung ist dabei dazu ausgebildet, an der ausgangsseitigen Schnittstelle zu der Elektrowerkzeugmaschine das Vorhandensein eines einzigen (virtuellen) Akkupacks zu emulieren. Dabei wertet die Signalverarbeitungseinheit die eingangsseitigen Daten, beispielsweise Parameter der Akkupacks, aus und gibt ausgangsseitig Informationen über das kritischere Datum der von den Akkupacks bereitgestellten Daten aus. Diese Information kann beispielsweise das kritischere Datum selbst sein oder ein Datenwert, der das Vorhandensein eines Fehlers oder das Nichtvorhandensein eines Fehlers angibt.

Die Daten dieses virtuellen Akkupacks werden dabei von den Daten der tatsächlich angeschlossenen Akkupacks in sinnvoller Weise durch die Signalverarbeitungseinheit zusammengestellt. Dabei vergleicht die Signalverarbeitungseinheit jeweils Datenwerte eines Datentyps und wählt zur Ausgabe denjenigen Wert bzw. dasjenige Datum aus, dass für die Betriebssicherheit beim Betrieb der Elektrowerkzeugmaschine mit den angeschlossenen Akkupacks relevanter ist, d.h. das kritischere bzw. kritischste Datum. Je nach Datentyp kann das der höhere bzw. höchste Wert der verglichenen Daten, der niedrigere bzw. niedrigste Wert der verglichenen Daten oder ein von einem vorgegebenen Wert oder Wertebereich am weitesten entfernte oder nächstliegende Wert der verglichenen Daten sein. Beispielsweise wäre es auch denkbar, dass ein kritischeres Datum ein ausgegebenes Datum (z.B. wenn das angeschlossene Akkupack nur im Falle eines Fehlers ein Datum ausgibt) oder das Fehlen eines Datums (z.B. wenn das angeschlossene Akkupack im Falle eines Fehlers kein Datum ausgibt) umfasst.

Die Signalverarbeitungseinheit und deren Komponenten können selbstverständlich in jeder für den Fachmann angebracht erscheinenden Form, beispielsweise als Mikrocontroller, FPGA oder ASIC realisiert sein. Die Signalverarbeitungseinheit kann ebenso als eine Zusammenwirkung von unterschiedlich realisierten Einzelkomponenten verstanden werden. Beispielsweise könnte die Komparatoreinheit als Microcontroller und die Selektionseinheit als ASIC ausgebildet sein.

Besonders vorteilhaft bei der erfindungsgemäßen Lösung ist, dass alle verbundenen Akkupacks überwacht werden können, ohne dass zur separaten Überwachung der angeschlossenen Akkupacks Vorkehrungen an der Elektrowerkzeugmaschine selbst getroffen werden müssen. Stattdessen erfolgt eine Vorauswahl der zu überwachenden Daten durch die Adapteranordnung, die von jedem Datentyp nur den Kritischeren an die Elektrowerkzeugmaschine ausgibt. Diese kann in bekannter Weise zur Auswertung der Betriebsdaten eines einzigen Akkupacks ausgestaltet sein. Somit kann die Adapteranordnung mit einer großen Anzahl unterschiedlichster Elektrowerkzeugmaschinen und insbesondere auch mit bereits auf dem Markt erhältlichen Modellen genutzt werden, da aufgrund ihrer Ausgestaltung eine hohe Abwärtskompatibilität besteht.

Erfindungsgemäß kann vorgesehen sein, dass die Datentypen der wenigstens zwei Akkupacks sicherheits- bzw. betriebskritische Daten der wenigstens zwei Akkupacks, insbesondere über eine Temperatur des jeweiligen Akkupacks und einen Ladezustand des jeweiligen Akkupacks umfassen.

Die Überwachung von sicherheits- bzw. betriebskritischen Daten der jeweiligen Ackupacks ist von Vorteil, da auf dieser Grundlage gezielt Maßnahmen zum Schutz und zur Erhöhung der Lebensdauer der Akkupacks für jedes einzelne Akkupack ergriffen werden können.

Weiter kann vorgesehen sein, dass die Signalverarbeitungseinheit eine digitale und/oder analoge Komparatoreinheit aufweist, die ausgebildet ist, um jeweils die an den eingangsseitigen Schnittstellen bereitgestellten Daten des gleichen Datentyps der wenigstens zwei Akkupacks zu vergleichen, derart, dass für jeden Datentyp für alle verbundenen Akkupacks das sicherheits- bzw. betriebskritischste Datum bestimmt wird.

Der direkte Vergleich der sicherheits- bzw. betriebskritischen Daten für jeden Datentyp und jedes Akkupack durch eine Komparatoreinheit ist vorteilhaft, da auf diese Weise das den Betrieb der Elektrowerkzeugmaschine einschränkende Akkupack eindeutig identifiziert werden kann. Es kann im Weiteren gezielt auf diese schwächste Komponente im Verbund der Akkupacks steuer- bzw. regelungstechnisch eingegangen werden. Eine alternative Ausgestaltung, beispielsweise in Form eines Schwellwertvergleichs, bei dem die Akkupacks nicht miteinander, sondern nur mit dem Schwellwert verglichen werden, und wobei im Falle eines Unter- oder Überschreitens dieses Werts ein sicherheits- bzw. betriebskritisches Datum bestimmt wird wäre selbstverständlich ebenfalls denkbar. In diesem Fall kann das einschränkende Akkupack allerdings nicht zwingend eindeutig identifiziert werden, insbesondere wenn mehrere Akkupacks den Schwellwert durchbrechen.

Es kann weiter vorgesehen sein, dass die Signalverarbeitungseinheit eine digitale und/oder analoge Multiplexing- bzw. Selektionseinheit aufweist, die ausgebildet ist, um jeweils das sicherheits- bzw. betriebskritischste Datum für jeden Datentyp von den eingangsseitigen Schnittstellen aufzunehmen und an der ausgangsseitigen Schnittstelle bereitzustellen.

Eine alternative Ausgestaltung wäre ebenso denkbar. Dabei kann an Stelle des von der eingangsseitigen Schnittstelle aufgenommenen sicherheits- bzw. betriebskritischsten Datums nur eine einfache Fehlerinformation oder eine solche Fehlerinformation in Form eines kritischen virtuellen Festwertes (z.B. Ladezustand = 0) an der ausgangsseitigen Schnittstelle bereitgestellt werden.

Durch die genannte Ausführung werden die Daten des an der ausgangsseitigen Schnittstelle emulierten virtuellen Akkupacks aus der Gesamtheit aller kritischen Datenwerte für jeden Datentyp aller angeschlossenen Akkupacks zusammengesetzt. Entsprechend nimmt eine Intelligenz der Elektrowerkzeugmaschine für jeden Datentyp das jeweils sicherheits- bzw. betriebskritischste Datum wahr. Entsprechende Maßnahmen wie Regelung, Steuerung oder Indikationen an den Benutzer berücksichtigen somit stets diese kritischste Komponente. Die genannten Maßnahmen können dabei mit höherer Genauigkeit bzw. Präzision erfolgen als dies durch eine einfache Fehlerinformation möglich wäre. Die Entscheidung wie die Selektionseinheit zu realisieren ist, kann von einem Fachmann in Hinblick auf die jeweilige Anwendung getroffen werden und ist nicht auf einen bestimmten Typ beschränkt zu verstehen. So wäre beispielsweise ein Aufbau als typischer Multiplexer oder als Tri-State Anordnung denkbar.

Erfindungsgemäß kann es vorgesehen sein, die eingangsseitigen Schnittstellen dazu auszubilden, die wenigstens zwei Akkupacks zumindest teilweise zu einer elektrischen Reihenschaltung und/oder elektrischen Parallelschaltung der elektrischen Versorgungskanäle zu verbinden.

Dementsprechend kann alternativ oder zusätzlich zu einer elektrischen Reihenschaltung der Akkupacks auch vorgesehen sein, die eingangsseitigen Schnittstellen dazu auszubilden, die wenigstens zwei Akkupacks zumindest teilweise zu einer elektrischen Parallelschaltung der elektrischen Versorgungskanäle zu verbinden.

Eine Verbindung der Akkupacks in elektrischer Reihenschaltung kann in vorteilhafter Weise die Versorgungsspannung der Elektrowerkzeugmaschine und deren Verbraucher erhöhen. So können beispielsweise zwei, drei oder mehr Akkupacks in Reihe geschaltet miteinander verbunden sein. Hingegen ist es möglich, durch eine elektrische Parallelschaltung der Akkupacks eine mögliche Stromzufuhr der Elektrowerkzeugmaschine bzw. deren Verbraucher zu erhöhen, oder die einzelnen Akkupacks bei gleichbleibender Stromzufuhr zu entlasten. So können beispielsweise zwei, drei oder mehr Akkupacks parallelgeschaltet miteinander verbunden sein.

Es kann weiterhin vorgesehen sein, dass zumindest ein Teil der eingangsseitigen Datenkanäle eine Datenaufbereitungseinheit in Form eines Controllers und/oder einer Pegelwandlung und/oder galvanische Trennung aufweist, die ausgebildet ist, um Daten auf Basis unterschiedlicher Spannungspegel von den verschiedenen Akkupacks zum funktionalen Empfang durch die Signalverarbeitungseinheit aufzubereiten.

Die genannte Anpassung der Spannungsbereiche der Signale der Akkupacks durch eine Datenaufbereitungseinheit kann eine sinnvolle Maßnahme zur Sicherstellung ordnungsgemäßer Kommunikation darstellen. Insbesondere wenn Akkupacks in Reihenschaltung mit einem oder mehreren anderen Akkupacks verbunden sind, können die Akkupacks Daten auf unterschiedlichen Spannungspegeln ausgeben. Die genannte Ausführung ist somit vorteilhaft, um auch die Akkupacks in die Überwachung mit einzubeziehen, die ihre Signale auf anderen Spannungspegeln übermitteln als die Signalverarbeitungseinheit.

Der technische Hintergrund wird anhand eines folgenden Beispiels erläutert. Die Signalverarbeitungseinheit kann beispielsweise dem Akkupack zugeordnet sein, das sich in der Reihenschaltung auf dem niedrigsten Potential befindet. Die Kathode, beziehungsweise das dort vorliegende elektrische Spannungspotential, eben dieses Akkupacks wird im Folgenden als GND1 und die Anode, beziehungsweise das dort vorliegende elektrische Spannungspotential, des Akkupacks als VDD1 bezeichnet. Da die Signalverarbeitungseinheit von diesem Akkupack versorgt wird, müssen sich, keine weiteren Maßnahmen vorausgesetzt, alle Signale, die die Signalverarbeitungseinheit ausgibt innerhalb des Spannungsbereichs GND1 bis VDD1 befinden. Eine digitale logische ,1' kann dann zum Beispiel als ein Spannungspegel größer als 90% VDD1, und eine digitale logische 0' kann beispielsweise entsprechend als ein Spannungspegel kleiner 10% VDD1 definiert werden.

Ein weiterer Controller und/oder Datenkanal kann nun einem Akkupack zugeordnet sein, das sich in der Reihenschaltung auf dem nächst höheren Potential befindet. Dessen Kathode, GND2, würde dann im Wesentlichen auf dem gleichen Spannungspotential wie VDD1 befindlich sein, da beide Anschlüsse gemäß Reihenschaltung verbunden sind. Eine entsprechende Anode, VDD2, läge dann entsprechend um die Akkupackspannung des zweiten Akkupacks höher. Da der weitere Controller und/oder Datenkanal von dem zweiten Akkupack betrieben wird, werden sich, keine weiteren Maßnahmen vorausgesetzt, alle Signale, die der Controller und/oder der Datenkanal ausgibt innerhalb des Spannungsbereichs GND2=VDD1 bis VDD2 befinden. Jeder digitale Wert (,0' = 10% VDD2 oder ,1' = 90% VDD2), der von dem weiteren Controller und/oder dem Datenkanal in diesem Fall an die Signalverarbeitungseinheit übermittelt würde, läge somit über der Definition dessen logischer ,1' = 90% VDD1. Dementsprechend kann die Signalverarbeitungseinheit keine Daten von dem Controller und/oder Datenkanal des zweiten Akkupacks einlesen und könnte durch die zu hoch befindliche Signalspannung sogar beschädigt werden. Analog könnte der Controller des zweiten Akkupacks auch keine Daten von der Signalverarbeitungseinheit einlesen, da jeder digitale Wert (,0' = 10% VDD1 oder ,1' = 90% VDD1), der von der Signalverarbeitungseinheit an den Controller übermittelt würde, unter der Definition dessen logischer ,0' = 10% VDD2 läge.

Wie zuvor erwähnt ist es im einfachsten Fall denkbar, alle Datenkanäle direkt mit der Signalverarbeitungseinheit über eine Pegelwandlung bzw. galvanische Trennung zu verbinden. Gleichwohl können durch die Verwendung eines Controllers pro angeschlossenem Akkupack die Signale aller Akkupacks gleichzeitig verarbeitet werden. Als Ergebnis kann eine Steuerung schneller auf potentiell kritische AkkupackZustände reagieren und beispielsweise eine Notabschaltung einleiten. Dadurch ist der Betrieb der Elektrowerkzeugmaschine mit mehreren Akkupacks grundsätzlich sicherer als bei der langsameren, sequentiellen Auswertung, wodurch sich die Lebensdauer der elektrischen Komponenten, insbesondere der Elektrowerkzeugmaschine erhöht.

Eine Alternative wäre auch die genannte Ausführung bei der eine galvanische Trennung zwischen der Signalverarbeitungseinheit und wenigstens einem verbundenen Datenkanal angeordnet ist, um diese elektrisch voneinander zu entkoppeln und in der Art eines Pegelwandlers den Spannungsbereich der Signale des zweiten Akkupacks an den Spannungsbereich der Signale des ersten Akkupacks anzugleichen. Hierbei werden also bei der Signalverarbeitungseinheit die Signale mehrerer Akkupacks zusammengeführt. Kennzeichnend ist hierbei die galvanische Trennung zwischen dem jeweiligen Akkupack-Datenkanal und der Signalverarbeitungseinheit, um diese elektrisch voneinander zu entkoppeln. Dies kann insbesondere über einen Optokoppler, Transformator oder kapazitiven Koppler erfolgen.

Der besondere Vorteil dieser Ausführung besteht in genannter elektrischer Entkopplung von Akkupack und Signalverarbeitungseinheit. Hierdurch werden die Elektrowerkzeugmaschine und/oder der Adapter sowie die Signalverarbeitungseinheit vor schweren Fehlern, wie beispielsweise Überspannung, geschützt.

In einer erfindungsgemäßen Ausführung kann über den wenigstens einen elektrischen Datenkanal in einer digitalen Signalübertragungsart wenigstens ein Datentyp in serieller Form übertragen werden.

Weiter kann es vorgesehen sein über den wenigstens einen elektrischen Datenkanal in einer analogen Signalübertragungsart wenigstens einen Datentyp zu übertragen.

Gegebenenfalls kann es erforderlich sein für die Aufnahme und Verarbeitung der analogen Eingangssignale seitig der Signalverarbeitungseinheit einen Analog-Digital-Wandler vorzusehen. Die Signalverarbeitungseinheit und deren Komponenten können in diesem Fall vollständig als digitale Bauteile ausgebildet sein. Lediglich zur Übertragung und Emulation des analogen Signals an der ausgangsseitigen Schnittstelle zur Elektrowerkzeugmaschine ist wiederum ein Digital-Analog-Wandler vorzusehen.

In einer weiteren erfindungsgemäßen Ausgestaltung kann es vorgesehen sein, dass für jeden der wenigstens zwei Akkupacks in Form eingangsseitiger Schnittstellen zwei Datenkanäle eingerichtet sind, wobei ein erster Datenkanal ausgebildet ist, um in digitaler Signalübertragungsart Daten über den Ladezustand des jeweiligen Akkupacks als ersten Datentyp zu übertragen, und wobei ein zweiter Datenkanal ausgebildet ist um in analoger Signalübertragung Daten über die Temperatur des jeweiligen Akkupacks als zweiten Datentyp zu übertragen, und wobei der zweite Datenkanal zusätzlich dazu ausgebildet ist, ersatzweise einen Fehlerzustand des jeweiligen Akkupacks anzuzeigen.

Die Ausbildung eines elektrischen Datenkanals für eine digitale Signalübertragungsart kann von Vorteil sein, um eine große Anzahl Daten sowie Datentypen beispielsweise seriell in robuster Form übermitteln zu können. Hierbei kann es sich beispielsweise um eine Klassifizierung des Akkupacks, die Anzahl enthaltener Akkuzellen des Akkupacks und die Einzelspannungen der Akkuzellen des Akkupacks handeln. Die Ausbildung eines Datenkanals für eine analoge Übertragungsart kann von Vorteil sein, um beispielsweise Sensordaten, wie den Wierstands-Wert eines Thermometers, direkt ausgeben zu können.

Vorteilhaft kann es weiterhin sein, wenn ein Mikrocontroller des jeweiligen Akkupacks bereits selbst bewertet, ob sich der Akkupack in einem kritischen Zustand befindet. Ein entsprechendes Fehlersignal des Akkupacks kann dann in einer vorteilhaften Ausführung der Erfindung zusätzlich über den analogen Temperaturdatenkanal übermittelt werden. Es wäre insbesondere denkbar, im Fehlerfall anstelle eines Temperaturamplitudensignals ein dauerhaftes Massesignal über den analogen Datenkanal auszugeben.

In einer weiteren Ausführung kann vorgesehen sein, dass die Adapteranordnung zumindest einen Indikator aufweist, um einem Benutzer zumindest ein kritischeres Datum und/oder einen Fehlerzustand zumindest eines der Akkupacks anzuzeigen. Ein solcher Indikator kann dabei durch zusätzliche Maßnahmen in der Adapteranordnung und/oder der Elektrowerkzeugmaschine, beispielsweise in Form analoger und/oder digitaler Bauteile, angesteuert werden. Es wäre aber insbesondere auch denkbar, dass die Signalverarbeitungseinheit und/oder sonstige Controller in der Adapteranordnung und/oder der Elektrowerkzeugmaschine zu diesem Zweck ausgebildet und eingesetzt werden.

Eine solche Indikation kann den Bedienkomfort der Elektrowerkzeugmaschine bei Verwendung des erfindungsgemäßen Adapters deutlich erhöhen. Durch die Informationsweitergabe an den Benutzer ist dieser in der Lage den Einsatz der Elektrowerkzeugmaschine vorausschauender zu planen und diese effizienter einzusetzen, beispielsweise mit Hilfe einer Restkapazitätsanzeige.

So hat sich bei aus dem Stand der Technik bekannten Lösungen gezeigt, dass eine gegebenenfalls vorhandene Indikation eines Akkupacks über dessen Zustand, z.B. in Form einer LED-Anzeige, bei einer Vielzahl der bekannten Adapterlösungen und Elektrowerkzeugmaschinen von Gehäuseteilen verdeckt wird. Demzufolge kann der Kunde die Indikatoren nicht direkt einsehen und auf kritische Zustände der Akkupacks nicht vorzeitig reagieren. Zudem muss der Kunde in einem Fehlerfall alle angeschlossenen Akkupacks vom Adapter abziehen und einzeln kontrollieren, was sich in der Praxis als unkomfortabel herausgestellt hat.

Durch das Vorsehen von wenigstens einem Indikator an der erfindungsgemäßen Adapteranordnung wird dieser bekannte Nachteil eliminiert und eine komfortablere und sichere Handhabung gewährleistet.

Einige mögliche Ausgestaltungen für eine Indikation an den Benutzer sind nachfolgend genannt, die Liste ist allerdings nicht als abgeschlossen zu verstehen. Alle Informationen, die der Betriebssicherheit und/oder Erhöhung der Lebensdauer von vorhandenen Komponenten, wie der Elektrowerkzeugmaschine, des Adapters oder der Akkupacks, sowie dem Bedienkomfort dienen, können angebracht sein. Es wäre weiterhin beispielsweise denkbar, eine einfache Fehleranzeige für einen oder mehrere Akkupacks vorzusehen, wobei jeweils einzelne Fehlerursachen und/oder eine Kombination bzw. Zusammenfassung von Fehlerursachen zur Anzeige gebracht werden können. Dies bedeutet, dass beispielsweise der Indikator aktiv anzeigt, dass ein Fehler vorliegt. Ebenso wäre es denkbar, eine Indikation insbesondere dann vorzunehmen, wenn ein kritischer Schwellwert durchbrochen wurde. Dies bedeutet, dass nicht erst im Falle eines Fehlers, sondern bereits bei Durchbrechen eines entsprechenden Schwellwerts eine Indikation dem Anwender erlaubt, präventiv zu handeln. In diesem Fall kann zudem entweder der Schwellwert und/oder der kritische Wert des auslösenden Akkupacks und/oder die entsprechenden Werte gleichen Datentyps aller Akkupacks angezeigt werden. Selbstverständlich ist es ebenso denkbar, mehrere verschiedene Datentypen anzuzeigen, wobei insbesondere für jeden Datentyp der kritischste Wert aller verbundenen Akkupacks angezeigt werden kann, gegebenenfalls mit der zusätzlichen Information, welches Akkupack den jeweiligen Werten zuzuordnen ist.

Weiter kann die Signalverarbeitungseinheit derart ausgebildet sein, die unterschiedlichen Fehlerzustände durch unterschiedliche Blink-Codes über den zumindest einen Indikator dem Benutzer anzuzeigen.

Die Verwendung von Blink-Codes für verschiedene Fehlerzustände stellt einen konstruktiven und wirtschaftlichen Vorteil dar. Sollen beispielsweise Fehlerzustände in binärer Form über eine LED angezeigt werden, kann bei Verwendung von Blink-Codes eine einzige LED zur Indikation verschiedener Fehlerzustände verwendet werden. Es muss folglich nicht eine LED für jeden einzelnen Fehlerzustand an der Adapteranordnung ausgebildet sein.

Schließlich wäre es denkbar, einen Indikator jeweils einem Akkupack zuzuordnen und diesen in Form einer LED-Anordnung auszubilden. Weiterhin könnten für jeden Akkupack auch mehrere Indikatoren vorgesehen sein, die jeweils unterschiedlichen Datenwerten zugeordnet sind.

In der Praxis wäre es insbesondere denkbar, dass ein Akkupack sich einer Tiefentladung gefährlich annähert oder zu überhitzen droht, während sich das oder die weiteren Akkupacks im Verbund in einem sicheren Zustand befinden. Durch die erfindungsgemäße Lösung würde der Intelligenz der Elektrowerkzeugmaschine der Fehlerfall übermittelt, wobei diese gegebenenfalls eine Abschaltung der Elektrowerkzeugmaschine vornehmen kann. Dennoch wüsste der Benutzer in diesem Fall nicht zwingend, welches Akkupack für den Fehler verantwortlich ist.

Eine Indikation für jeden Akkupack kann den Komfort für den Benutzer somit deutlich erhöhen, da in dieser Ausführung alle angeschlossenen Akkupackzustände gleichzeitig eingesehen und direkt zugeordnet werden. Hierzu bietet es sich insbesondere an, die Indikatoren in offensichtlicher Nähe zu den jeweils zugeordneten Akkupacks anzubringen. Der Benutzer ist somit in der Lage in einem Fehlerfall ein kritisches Ackupack schnell zu identifizieren und auszutauschen, ohne jedes Akkupack einzeln kontrollieren zu müssen. Eine Ausbildung der Indikatoren als LED-Anordnungen kann weiter eine technisch einfache, robuste und günstige Lösung darstellen.

Die Figuren zeigen ein bevorzugtes Ausführungsbeispiel, in dem einzelne Merkmale der vorliegenden Erfindung in Kombination miteinander dargestellt sind. Diese sind jedoch auch losgelöst voneinander zu betrachten und können dementsprechend von einem Fachmann ohne Weiteres zu weiteren sinnvollen Unterkombinationen verbunden werden.

Es zeigen schematisch:
- Figur 1: eine Ansicht einer Elektrowerkzeugmaschine in der Ausführung einer Elektrohandbohrmaschine mit netzunabhängiger Stromversorgung;
- Figur 2: eine Ansicht einer erfindungsgemäßen Adapteranordnung für die elektrische Verbindung von zwei Akkupacks; und
- Figur 3: eine schematische Darstellung einer erfindungsgemäßen Schaltungsanordnung für die Reihenschaltung von zwei Akkupacks unter Verwendung einer Signalverarbeitungseinheit.

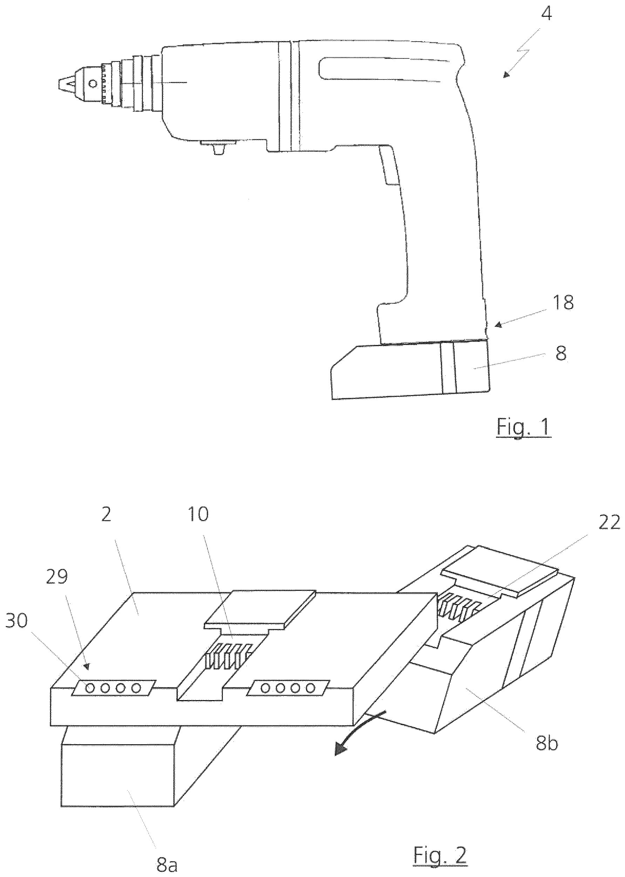

Die Figur 1 zeigt beispielhaft eine als Elektrohandbohrmaschine ausgeführte Elektrowerkzeugmaschine 4 mit einer Schnittstelle 18 zur mechanischen und elektrischen Verbindung eines Akkupacks 8.

Eine entsprechende beispielhafte Ausgestaltung für eine erfindungsgemäße Adapteranordnung 2 ist in Figur 2 dargestellt. Die dargestellte Adapteranordnung 2 kann dabei bis zu zwei unterschiedlich ausgelegte Akkupacks 8a, 8b aufnehmen. Selbstverständlich ist die Erfindung jedoch auch auf Anordnungen anwendbar, bei denen mehr als zwei Akkupacks an dem Adapter aufgenommen werden können. Die ausgangsseitige Schnittstelle 10 ist so ausgelegt, dass sie mit der korrespondierenden Schnittstelle an der Elektrowerkzeugmaschine 4 zusammenpasst, so dass die Elektrowerkzeugmaschine 4 die Adapteranordnung 10 anstelle eines einzelnen Akkupacks 8 aufnehmen kann. Die Schnittstelle 10 der Adapteranordnung 2 ist folglich der Schnittstelle 22 der Akkupacks 8, 8a, 8b nachempfunden und ermöglicht sowohl eine mechanische als auch elektrische Verbindung der Adapteranordnung 10 mit der Elektrowerkzeugmaschine 4. Die Figur 2 zeigt weiterhin eine mögliche Ausgestaltung der Indikatoren 29. Jedem Akkupack 8a, 8b wird dabei ein separater Indikator 29 zugeordnet und zur Verdeutlichung der Zuordnung direkt oberhalb des jeweiligen Ackupacks 8a, 8b angeordnet. Die Indikatoren 29 sind in der dargestellten Ausführung als LED-Anordnung 30 realisiert. Beispielsweise kann somit eine LED als Fehlerzustandsanzeige über Blink-Codes verwendet werden und drei weitere LEDs können in diskreter Weise Datenwerte wie Restkapazität anzeigen.

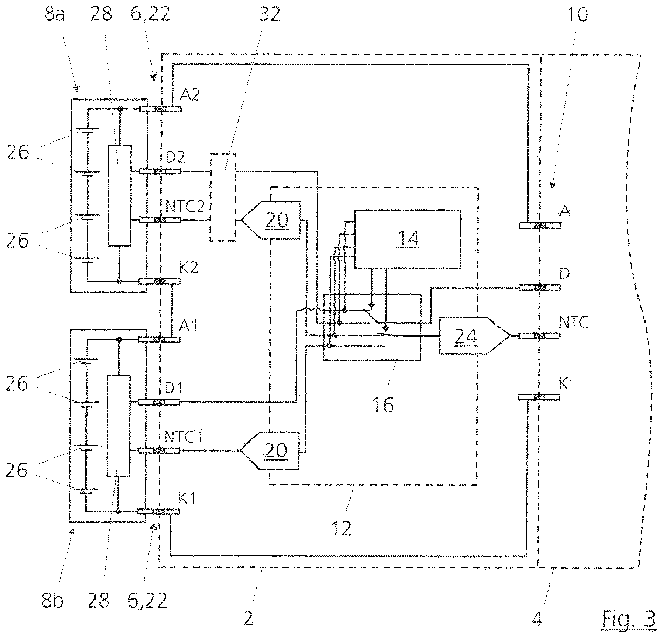

Eine erfindungsgemäße Ausgestaltung einer Schaltungsanordnung, bei der die Ackupacks 8a, 8b beispielhaft in Reihe verschaltet sind, ist in Figur 3 dargestellt. Ein Akkupack 8, 8a, 8b beinhaltet unter anderem eine Anzahl von Akkuzellen 26, einen Microcontroller 28 zur internen Überwachung des Akkupacks 8, 8a, 8b und eine ausgangsseitige Schnittstelle 22.

Die dargestellten Schnittstellen 6 der Adapteranordnung 2 sind in der gezeigten Ausführungsform dazu ausgebildet, zunächst eine Kathode K2 und Anode A1 der beiden Akkupacks 8a, 8b zu verbinden und die jeweils andere Anode A2 und Kathode K1 an der ausgangsseitigen Schnittstelle 10 zur elektrischen Versorgung der Elektrowerkzeugmaschine 4 bereit zu stellen. Weiterhin kann jeweils ein digitaler Datenkanal D1, D2 der Akkupacks 8a, 8b direkt in der Signalverarbeitungseinheit 12 verarbeitet werden, wobei jeweils ein gemischt analog/digitaler Datenkanal NTC1, NTC2 über jeweils einen entsprechenden Analog-Digital-Wandler 20 geleitet wird. In der Signalverarbeitungseinheit 12 ist eine digitale Komparatoreinheit 14 vorgesehen, die aus allen vorhandenen Datentypen die jeweils sicherheits- bzw. betriebskritischsten Daten bzw. das zugehörige Akkupack 8a, 8b selektiert. Zur Sicherstellung ordnungsgemäßer und robuster Kommunikation im Falle einer Reihenschaltung von Akkupacks 8a, 8b, kann eine Datenaufbereitungseinheit 32 zur Pegelwandlung oder galvanische Trennung von Datenkanälen erforderlich sein (in der Figur 3 gestrichelt dargestellt). Es wäre aber ebenso denkbar, die Datenaufbereitungseinheit 32 in Form eines Controllers mit anschließender Pegelwandlung oder galvanischer Trennung zu realisieren, wobei eine schnelle Vorverarbeitung der Daten des Akkupacks 8a stattfinden kann.

Aus Gründen der Anschaulichkeit wurde ein Ausführungsbeispiel gewählt, bei dem nur ein einziger Datentyp über die digitalen Datenkanäle D1, D2 übermittelt wird. Eine digitale Multiplexingeinheit 16 wird im Folgenden verwendet, um die durch die Komparatoreinheit 14 selektierten kritischen Datenwerte der jeweiligen Akkupacks 8a, 8b an den Datenkanälen D, NTC der ausgangsseitigen Schnittstelle 10 bereit zu stellen. Um die ausgangsseitige Schnittstelle 10 der Adapteranordnung 2 kompatibel zu den Schnittstellen 22 der Akkupacks 8, 8a, 8b auszulegen wird das ehemals analoge Signal über einen entsprechenden Digital-Analog-Wandler 24 zuvor zurückkonvertiert.

## Patentansprüche

1. Adapteranordnung (2) insbesondere zur Verwendung mit einer Elektrowerkzeugmaschine (4), aufweisend:
eine Anzahl von eingangsseitigen Schnittstellen (6) zur elektrischen Verbindung von wenigstens zwei Akkupacks (8a, 8b),
eine ausgangsseitige Schnittstelle (10) zur elektrischen Verbindung mit der Elektrowerkzeugmaschine (4),
wobei jede der Schnittstellen (6, 10) wenigstens einen elektrischen Datenkanal (D, D1, D2, NTC, NTC1, NTC2) zum Übertragen von wenigstens einem Datentyp und wenigstens einen elektrischen Versorgungskanal (K, K1, K2, A, A1, A2) aufweist,
wobei die Adapteranordnung (2) dazu eingerichtet ist, über die Datenkanäle (D1, D2, NTC1, NTC2) der eingangsseitigen Schnittstellen (6) Daten von den verbundenen Akkupacks (8a, 8b), insbesondere über ihren Zustand, und über die elektrischen Versorgungskanäle (K1, K2, A1, A2) der eingangsseitigen Schnittstellen (6) Strom und Spannung zur elektrischen Versorgung wenigstens eines Verbrauchers der Elektrowerkzeugmaschine (4) zu empfangen, und
eine Signalverarbeitungseinheit (12), die dazu ausgebildet ist, die bereitgestellten Daten der Akkupacks (8a, 8b) zu verarbeiten und an der ausgangsseitigen Schnittstelle (10) bereitzustellen, **dadurch gekennzeichnet, dass** die Signalverarbeitungseinheit (12) dazu eingerichtet ist, die bereitgestellten Daten des gleichen Datentyps zu vergleichen und jeweils eine Information über das kritischere Datum an der ausgangsseitigen Schnittstelle (10) bereitzustellen.

2. Adapteranordnung (2) nach Anspruch 1, **dadurch gekennzeichnet, dass** die Datentypen der wenigstens zwei Akkupacks (8a, 8b) sicherheits- bzw. betriebskritische Daten der wenigstens zwei Akkupacks (8a, 8b), insbesondere über eine Temperatur des jeweiligen Akkupacks (8a, 8b) und einen Ladezustand des jeweiligen Akkupacks (8a, 8b), umfassen.

3. Adapteranordnung (2) nach einem der vorhergehenden Ansprüche, **dadurch gekennzeichnet, dass** die Signalverarbeitungseinheit (12) eine digitale und/oder analoge Komparatoreinheit (14) aufweist, die ausgebildet ist, um jeweils die an den eingangsseitigen Schnittstellen (6) bereitgestellten Daten des gleichen Datentyps der wenigstens zwei Akkupacks (8a, 8b) zu vergleichen, derart, dass für jeden Datentyp für alle verbundenen Akkupacks (8a, 8b) das sicherheits- bzw. betriebskritischste Datum bestimmt wird.

4. Adapteranordnung (2) nach einem der vorhergehenden Ansprüche, **dadurch gekennzeichnet, dass** die Signalverarbeitungseinheit (12) eine digitale und/oder analoge Multiplexing- bzw. Selektionseinheit (16) aufweist, die ausgebildet ist, um jeweils das sicherheits- bzw. betriebskritischste Datum für jeden Datentyp von den eingangsseitigen Schnittstellen (6) aufzunehmen und an der ausgangsseitigen Schnittstelle (10) bereitzustellen.

5. Adapteranordnung (2) nach einem der vorhergehenden Ansprüche, **dadurch gekennzeichnet, dass** die eingangsseitigen Schnittstellen (6) dazu ausgebildet sind, die wenigstens zwei Akkupacks (8a, 8b) zumindest teilweise zu einer elektrischen Reihenschaltung und/oder elektrischen Parallelschaltung der elektrischen Versorgungskanäle (K1, K2, A1, A2) zu verbinden.

6. Adapteranordnung (2) nach einem der vorhergehenden Ansprüche, **dadurch gekennzeichnet, dass** zumindest ein Teil der eingangsseitigen Datenkanäle (D1, D2, NTC1, NTC2) eine Datenaufbereitungseinheit (32) in Form eines Controllers und/oder einer Pegelwandlung und/oder galvanische Trennung aufweist, die ausgebildet ist, um Daten auf Basis unterschiedlicher Spannungspegel von den verschiedenen Akkupacks (8a, 8b) zum funktionalen Empfang durch die Signalverarbeitungseinheit (12) aufzubereiten.

7. Adapteranordnung (2) nach einem der vorhergehenden Ansprüche, **dadurch gekennzeichnet, dass** über den wenigstens einen elektrischen Datenkanal (D1, D2) in einer digitalen Signalübertragungsart wenigstens ein Datentyp in serieller Form übertragbar ist.

8. Adapteranordnung (2) nach einem der vorhergehenden Ansprüche, **dadurch gekennzeichnet, dass** über den wenigstens einen elektrischen Datenkanal (NTC1, NTC2) in einer analogen Signalübertragungsart wenigstens ein Datentyp übertragbar ist.

9. Adapteranordnung (2) nach einem der vorhergehenden Ansprüche, **dadurch gekennzeichnet, dass** für jeden der wenigstens zwei Akkupacks (8a, 8b) in Form eingangsseitiger Schnittstellen (6) zwei Datenkanäle (D1, D2, NTC1, NTC2) eingerichtet sind, wobei ein erster Datenkanal (D1, D2) ausgebildet ist, um in digitaler Signalübertragungsart Daten über den Ladezustand des jeweiligen Akkupacks (8a, 8b) als ersten Datentyp zu übertragen, und wobei ein zweiter Datenkanal (NTC1, NTC2) ausgebildet ist, um in analoger Signalübertragungsart Daten über die Temperatur des jeweiligen Akkupacks (8a, 8b) als zweiten Datentyp zu übertragen, und wobei der zweite Datenkanal (NTC1, NTC2) zusätzlich dazu ausgebildet ist, ersatzweise einen Fehlerzustand des jeweiligen Akkupacks (8a, 8b) anzuzeigen.

10. Adapteranordnung (2) nach einem der vorhergehenden Ansprüche, **dadurch gekennzeichnet, dass** die Adapteranordnung (2) zumindest einen Indikator (29) umfasst, der dazu ausgebildet ist, einem Benutzer zumindest ein Datum und/oder einen Fehlerzustand zumindest eines der Akkupacks (8a, 8b) anzuzeigen.

11. Adapteranordnung (2) nach Anspruch 10, **dadurch gekennzeichnet, dass** die Signalverarbeitungseinheit (12) derart ausgebildet ist, die unterschiedlichen Fehlerzustände durch unterschiedliche Blink-Codes über den zumindest einen Indikator (29) dem Benutzer anzuzeigen.

12. Adapteranordnung (2) nach einem der Ansprüche 10 oder 11, **dadurch gekennzeichnet, dass** ein Indikator (29) jeweils einem Akkupack (8a, 8b) zugeordnet ist, und wobei ein Indikator (29) in Form einer LED-Anordnung (30) ausgebildet ist.

## Claims

1. Adapter arrangement (2) in particular for use with an electric power tool (4), having:
a number of input-side interfaces (6) for the electrical connection of at least two rechargeable battery packs (8a, 8b),
an output-side interface (10) for the electrical connection to the electric power tool (4),
wherein each of the interfaces (6, 10) has at least one electrical data channel (D, D1, D2, NTC, NTC1, NTC2) for transmitting at least one data type and at least one electrical supply channel (K, K1, K2, A, A1, A2),
wherein the adapter arrangement (2) is configured to receive data from the connected rechargeable battery packs (8a, 8b), in particular about their state, via the data channels (D1, D2, NTC1, NTC2) of the input-side interfaces (6) and to receive current and voltage for the purpose of supplying electrical power to at least one consumer of the electric power tool (4) via the electrical supply channels (K1, K2, A1, A2) of the input-side interfaces (6), and
a signal processing unit (12), which is designed to process the provided data of the rechargeable battery packs (8a, 8b) and to provide said data at the output-side interface (10), **characterized in that** the signal processing unit (12) is configured to compare the provided data of the same data type and to provide in each case a piece of information about the more critical item of data at the output-side interface (10).

2. Adapter arrangement (2) according to Claim 1, **characterized in that** the data types of the at least two rechargeable battery packs (8a, 8b) comprise safety-critical or operation-critical data of the at least two rechargeable battery packs (8a, 8b), in particular about a temperature of the respective rechargeable battery pack (8a, 8b) and a state of charge of the respective rechargeable battery pack (8a, 8b).

3. Adapter arrangement (2) according to either of the preceding claims, **characterized in that** the signal processing unit (12) has a digital and/or analogue comparator unit (14), which is designed to compare in each case the data of the same data type of the at least two rechargeable battery packs (8a, 8b) provided at the input-side interfaces (6) in such a way that the most safety-critical or operation-critical item of data is determined for each data type for all connected rechargeable battery packs (8a, 8b).

4. Adapter arrangement (2) according to one of the preceding claims, **characterized in that** the signal processing unit (12) has a digital and/or analogue multiplexing or selection unit (16), which is designed to receive in each case the most safety-critical or operation-critical item of data for each data type from the input-side interfaces (6) and to provide same to the output-side interface (10).

5. Adapter arrangement (2) according to one of the preceding claims, **characterized in that** the input-side interfaces (6) are designed to connect the at least two rechargeable battery packs (8a, 8b) at least partly to form an electrical series circuit and/or electrical parallel circuit of the electrical supply channels (K1, K2, A1, A2).

6. Adapter arrangement (2) according to one of the preceding claims, **characterized in that** at least some of the input-side data channels (D1, D2, NTC1, NTC2) have a data preparation unit (32) in the form of a controller and/or a level conversion and/or DC isolation, which data preparation unit is designed to prepare data based on different voltage levels of the different rechargeable battery packs (8a, 8b) for the functional reception by the signal processing unit (12).

7. Adapter arrangement (2) according to one of the preceding claims, **characterized in that** at least one data type is able to be transmitted in serial form via the at least one electrical data channel (D1, D2) in a digital type of signal transmission.

8. Adapter arrangement (2) according to one of the preceding claims, **characterized in that** at least one data type is able to be transmitted via the at least one electrical data channel (NTC1, NTC2) in an analogue type of signal transmission.

9. Adapter arrangement (2) according to one of the preceding claims, **characterized in that**, for each of the at least two rechargeable battery packs (8a, 8b), two data channels (D1, D2, NTC1, NTC2) are configured in the form of input-side interfaces (6), wherein a first data channel (D1, D2) is designed to transmit data about the state of charge of the respective rechargeable battery pack (8a, 8b) as a first data type in a digital type of signal transmission, and wherein a second data channel (NTC1, NTC2) is designed to transmit data about the temperature of the respective rechargeable battery pack (8a, 8b) as a second data type in an analogue type of signal transmission, and wherein the second data channel (NTC1, NTC2) is additionally designed to alternatively indicate a fault state of the respective rechargeable battery pack (8a, 8b).

10. Adapter arrangement (2) according to one of the preceding claims, **characterized in that** the adapter arrangement (2) comprises at least one indicator (29), which is designed to indicate to a user at least one item of data and/or a fault state of at least one of the rechargeable battery packs (8a, 8b).

11. Adapter arrangement (2) according to Claim 10, **characterized in that** the signal processing unit (12) is designed in such a way as to indicate to the user the different fault states by way of different blink codes via the at least one indicator (29).

12. Adapter arrangement (2) according to one of Claims 10 or 11, **characterized in that** an indicator (29) is associated in each case with one rechargeable battery pack (8a, 8b), and wherein an indicator (29) is designed in the form of an LED arrangement (30).

## Revendications

1. Dispositif adaptateur (2), en particulier pour une utilisation avec une machine-outil électrique (4), comprenant :
un certain nombre d'interfaces d'entrée (6) pour la connexion électrique d'au moins deux blocs d'accumulateurs (8a, 8b),
une interface de sortie (10) pour la connexion électrique de la machine-outil électrique (4),
dans lequel chacune des interfaces (6, 10) comprend au moins un canal de données électrique (D, D1, D2, NTC, NTC1, NTC2) pour la transmission d'au moins un type de données et au moins un canal d'alimentation électrique (K, K1, K2, A, A1, A2),
dans lequel le dispositif adaptateur (2) est agencé pour recevoir via les canaux de données (D1, D2, NTC1, NTC2) des interfaces d'entrée (6), des données des blocs d'accumulateurs (8a, 8b) connectés, en particulier sur leur état, et via les canaux d'alimentation électrique (K1, K2, A1, A2) des interfaces d'entrée (6), le courant et la tension pour l'alimentation électrique d'au moins un consommateur de la machine-outil électrique (4), et une unité de retraitement des signaux (12) agencée pour retraiter les données fournies par les blocs d'accumulateurs (8a, 8b) et les fournir à l'interface de sortie (10), **caractérisé en ce que** l'unité de retraitement des signaux (12) est agencée pour comparer les données fournies du même type de données et fournir une information sur la donnée la plus critique à l'interface de sortie (10).

2. Dispositif adaptateur (2) selon la revendication 1, **caractérisé en ce que** les types de données des au moins deux blocs d'accumulateurs (8a, 8b) comprennent des données critiques pour la sécurité ou le fonctionnement des au moins deux blocs d'accumulateurs (8a, 8b), notamment sur une température des blocs d'accumulateurs (8a, 8b) respectifs et un état de charge des blocs d'accumulateurs (8a, 8b) respectifs.

3. Dispositif adaptateur (2) selon l'une des revendications précédentes, **caractérisé en ce que** l'unité de retraitement des signaux (12) comporte une unité de comparaison (14) numérique et/ou analogique, agencée pour comparer respectivement les données du même type de données des au moins deux blocs d'accumulateurs (8a, 8b) fournies aux interfaces d'entrée (6), de sorte à déterminer pour chaque type de données et pour tous les blocs d'accumulateurs (8a, 8b) connectés, la donnée la plus critique pour la sécurité ou le fonctionnement.

4. Dispositif adaptateur (2) selon l'une des revendications précédentes, **caractérisé en ce que** l'unité de retraitement des signaux (12) comporte une unité de multiplexage ou de sélection (16) numérique et/ou analogique, agencée pour recevoir des interfaces d'entrée (6) la donnée de chaque type de données la plus critique pour la sécurité ou le fonctionnement et la fournir à l'interface de sortie (10).

5. Dispositif adaptateur (2) selon l'une des revendications précédentes, **caractérisé en ce que** les interfaces d'entrée (6) sont agencées pour relier les au moins deux blocs d'accumulateurs (8a, 8b) au moins en partie pour former un circuit électrique en série et/ou parallèle des canaux d'alimentation électrique (K1, K2, A1, A2).

6. Dispositif adaptateur (2) selon l'une des revendications précédentes, **caractérisé en ce qu'**au moins une partie des canaux de données d'entrée (D1, D2, NTC1, NTC2) comprend une unité de préparation des données (32) sous la forme d'un contrôleur et/ou d'une conversion de niveau et/ou d'une isolation galvanique agencée pour préparer des données sur la base de différents niveaux de tension des différents blocs d'accumulateurs (8a, 8b) pour la réception fonctionnelle par l'unité de retraitement des signaux (12).

7. Dispositif adaptateur (2) selon l'une des revendications précédentes, **caractérisé en ce qu'**au moins un type de données est transmissible sous forme sérielle via l'au moins un canal électrique de données (D1, D2) selon un procédé de transmission de signal numérique.

8. Dispositif adaptateur (2) selon l'une des revendications précédentes, **caractérisé en ce qu'**au moins un type de données est transmissible via l'au moins un canal électrique de données (NTC1, NTC2) selon un procédé de transmission de signal analogique.

9. Dispositif adaptateur (2) selon l'une des revendications précédentes, **caractérisé en ce que**, pour chacun des au moins deux blocs d'accumulateurs (8a, 8b), deux canaux de données (D1, D2, NTC1, NTC2) sont prévus sous la forme d'interfaces d'entrée (6), dans lequel un premier canal de données (D1, D2) est agencé, pour transmettre selon un procédé de transmission de signal numérique, des données sur l'état de charge des blocs d'accumulateurs (8a, 8b) respectifs formant un premier type de données, et dans lequel un second canal de données (NTC1, NTC2) est agencé, pour transmettre selon un procédé de transmission de signal analogique, des données sur la température des blocs d'accumulateurs (8a, 8b) respectifs formant un second type de données, et dans lequel le second canal de données (NTC1, NTC2) est en outre agencé pour indiquer comme solution de remplacement un état de défaut des blocs d'accumulateurs (8a, 8b) respectifs.

10. Dispositif adaptateur (2) selon l'une des revendications précédentes, **caractérisé en ce que** le dispositif adaptateur (2) comprend au moins un indicateur (29) agencé pour indiquer à un utilisateur au moins une donnée et/ou un état de défaut d'au moins l'un des blocs d'accumulateurs (8a, 8b).

11. Dispositif adaptateur (2) selon la revendication 10, **caractérisé en ce que** l'unité de retraitement des données (12) est agencée pour indiquer à l'utilisateur les différents états de défaut par différents codes de clignotement au moyen de l'au moins un indicateur (29).

12. Dispositif adaptateur (2) selon l'une des revendications 10 ou 11, **caractérisé en ce qu'**un indicateur (29) est affecté respectivement à un bloc d'accumulateurs (8a, 8b), et dans lequel un indicateur (29) est réalisé sous la forme d'un agencement de LED.
